# EUROPÄISCHE PATENTSCHRIFT

(11) **EP 1 811 722 B1**
(45) Veröffentlichungstag und Bekanntmachung des Hinweises auf die Patenterteilung: **02.12.2009**
(21) Anmeldenummer: 07000939.4
(22) Anmeldetag: 17.01.2007
(51) Int. Cl.: H04L 12/40, G05B 19/00, G06F 11/08

(54) **Verfahren und Vorrichtung zur Umwandlung mehrkanalig vorliegender Nachrichten in eine einkanalige sichere Nachricht**
Method and device for converting messages on multiple channels into a safe single channel message
Procédé et dispositif pour la conversion de messages présents sur plusieurs canaux en un message fiable sur un seul canal

(30) Priorität: 19.01.2006 DE 102006002824
(43) Veröffentlichungstag der Anmeldung: 25.07.2007
(73) Patentinhaber: Phoenix Contact GmbH & Co. KG, 32825 Blomberg (DE)
(72) Erfinder: Oster, Viktor, 32825 Blomberg (DE); Landwehr, Heinz-Carsten, 32657 Lemgo (DE); Schmidt, Joachim, 31812 Bad Pyrmont (DE)
(74) Vertreter: Kampfenkel, Klaus

(56) Entgegenhaltungen:
- DE-A1- 2 835 095
- DE-A1- 4 444 688
- DE-A1- 10 065 907
- DE-A1- 19 532 639
- DE-A1-102004 039 932

## Beschreibung

Die Erfindung betrifft ein Verfahren sowie eine zur Durchführung des Verfahrens angepasste Vorrichtung zur Ankopplung sicherheitsrelevanter Prozesse aus einer sicheren, mehrkanaligen Umgebung an eine nicht sichere und/oder weniger Kanäle aufweisende Umgebung, insbesondere zur einkanaligen Busankopplung sicherheitsrelevanter Prozesse.

Unter einem sicherheitsrelevanten bzw. sicherheitskritischen Prozess wird nachfolgend ein Prozess verstanden, von dem bei Auftreten eines Fehlers eine nicht zu vernachlässigende Gefahr für Menschen und/oder auch materielle Güter ausgeht. Bei einem sicherheitsrelevanten Prozess muss daher mit im Idealfall 100-prozentiger Sicherheit gewährleistet sein, dass bei Vorliegen eines Fehlers dieser Prozess, ein mit diesem Prozess gekoppelter Folgeprozess und/oder ein diesen Prozess umfassendes Gesamtsystem in einen sicheren Zustand überführt wird. Derartige sicherheitsrelevante Prozesse können somit auch Teilprozesse von größeren, übergeordneten Gesamtprozessen sein. Beispiele für sicherheitsrelevante Prozesse sind chemische Verfahren, bei denen kritische Parameter unbedingt in einem vorgegebenen Bereich gehalten werden müssen, komplexe Maschinensteuerungen, wie etwa bei einer hydraulischen Presse oder einer Fertigungsstraße, bei welchen beispielsweise das Inbetriebnehmen eines Press-/Schneidwerkzeuges einen sicherheitsrelevanten Teilprozess darstellen kann. Weitere Beispiele für sicherheitsrelevante (Teil-) Prozesse sind die Überwachung von Schutzgittern, Schutztüren oder Lichtschranken, die Steuerung von Zweihandschaltern oder auch die Reaktion auf Notausschalter.

Für alle sicherheitsrelevanten Prozesse ist es somit unbedingt erforderlich, dass die jeweils zugehörigen, erzeugten oder erfassten bzw. gemessenen, sicherheitsrelevanten Daten ohne irgendeine Verfälschung zeitnah transportiert werden, da jede Verfälschung eine fehlerhafte Funktion und/oder Reaktion zur Folge haben kann, die in letzter Konsequenz das Leben und die Gesundheit von Personen gefährden kann.

Um den Sicherheitsanforderungen gerecht zu werden, hat es in den letzten Jahren zahlreiche Vereinbarungen gegeben, die einen nahezu fehlerfreien Datentransport beim Einsatz von Bussystemen fordern. Diese betreffen insbesondere den Datentransport selbst sowie eine zulässige Restfehlerwahrscheinlichkeit in Abhängigkeit der jeweiligen Anwendung bzw. des jeweiligen Prozesses. Als einschlägige Standards sind hierbei insbesondere die EN 61508 und die EN 954-1 zu nennen sowie die Grundsätze für die Prüfung und Zertifizierung von "Bussystemen für die Übertragung sicherheitsrelevanter Nachrichten" der Prüf- und Zertifizierungsstelle der gewerblichen Berufsgenossenschaften.

Entsprechend dieser Vereinbarungen und Normen sind sicherheitsgerichtete Bussysteme entwickelt worden, die Daten mit hoher Redundanz übertragen. Mögliche Fehler werden rechtzeitig entdeckt und eine Gefährdung kann abgewendet werden. Beispiele hierfür sind unter anderem der Safety Bus P, Profibus F, Interbus Safety, u.a.

Nachteilig hierbei ist jedoch, dass für den Einsatz sicherheitsgerichteter Bussysteme bereits installierte Bussysteme ersetzt werden müssen und häufig Einschränkungen bei der Anzahl der Teilnehmer, bei der Datentransportrate oder beim Datenprotokoll in Kauf genommen werden müssen.

Als Folge sind sicherheitsgerichtete Verfahren und/oder Komponenten entwickelt worden, die eine einfachere und kostengünstigere Nachrüstung bereits existierender Bussysteme ermöglichen. Insbesondere bei der Steuerungs-und Automatisierungstechnik verwendete elektronische Sicherungsverfahren nutzen hierbei zur Übertragung sicherheitsrelevanter Daten, insbesondere zwischen Sensoren, Aktoren und/oder Steuerungseinrichtungen, die zwischen den einzelnen an einem Prozess beteiligten Einheiten bereits eingesetzten (Feld-) Bussysteme zur Datenkommunikation.

Die EP 1 188 096 B1 offenbart beispielsweise eir. Steuerungssystem für einen sicherheitsrelevanter. Prozess mit einem Feldbus, über den eine Steuereinheit zum Steuern des sicherheitsrelevanten Prozesses und eine Signaleinheit, die über E/A-Kanäle mit dem sicherheitsrelevanten Prozess verknüpft ist, verbunden sind. Um eine fehlersichere Kommunikation miteinander zu gewährleisten, weisen diese Einheiten sicherheitsbezogene Einrichtungen auf, durch welche an sich nicht sichere Einheiten zu sicheren Einheiten werden sollen. Im Einzelnen sind jeweils zumindest zwei redundante Verarbeitungskanäle derart vorgesehen, dass ein Fehler in einem der Verarbeitungskanäle anhand eines Ergebnisses, welches von demjenigen eines anderen der redundanten verarbeitungskanals abweicht, erkannt und gegebenenfalls korrigiert werden kann. Diese mehrkanalige Struktur wird insbesondere durch zwei redundante Rechner realisiert, wobei die Sicherheitsbetrachtung nach den beiden redundanten Rechnern endet und die Betrachtung für ein sicheres Datenprotokoll ab dieser Stelle ohne weitere Ausführungen zum Tragen kommt.

Unter dem allgemeinen Begriff Rechner sind nachfolgend im Wesentlichen jede Art von Software und/oder Hardware umfassenden Datenverarbeitungseinrichtungen wie z.B. MikroComputer, Mikro-Prozessoren, Mikro-Controller oder auch PC's, zu verstehen.

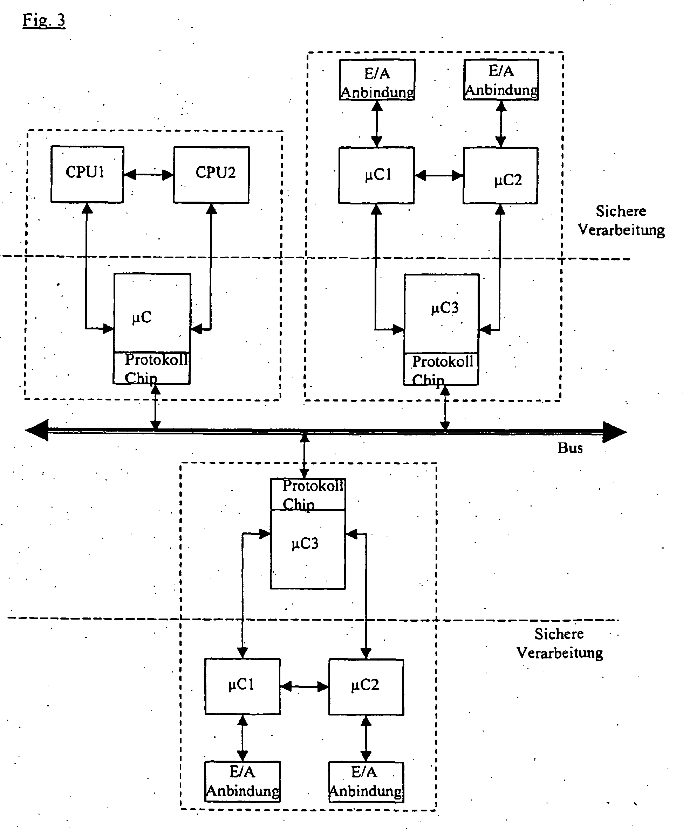

Auch die WO 01/15385 A2 betrifft die Steuerung sicherheitsrelevanter Prozesse unter Verwendung von (Feld-) Bussystemen, wobei die an der Steuerung des sicherheitsrelevanten Prozesses beteiligten Einheiten wiederum in der Regel redundant aufgebaute Verarbeitungskanäle aufweisen. Jeder der redundanten Kanäle umfasst einen Rechner, die sich gegenseitig kontrollieren. Diese mehrkanalige Struktur wird über einen weiteren mit dem Feldbus verbunden Rechner in eine einkanalige Struktur überführt (Fig. 3). Weitergehende Ausführungen einschließlich des Übergangs von der Mehrkanaligkeit zur Einkanaligkeit sind der Schrift nicht zu entnehmen.

Der WO 01/15391 A1 und der Offenlegungsschrift DE 199 39 567 A1 sind weitere Beispiele sicherer Busteilnehmer mit sich gegenseitig hinsichtlich einer sicheren Protokollerstellung kontrollierenden, redundant ausgeführten Verarbeitungskanälen und/oder Rechner und anschließendem Übergang von der Zweikanaligkeit zur Einkanaligkeit über einen weiteren an den Bus gekoppelten Rechner, der an einen Protokoll-Chip angeschlossen ist oder diesen integriert hat, zu entnehmen. Auch hier endet die Sicherheitsbetrachtung ohne die Offenbarung weiterer technischer Maßnahmen nach den beiden redundanten Rechnern und die Betrachtung für ein sicheres Datenprotokoll kommt ab dieser Stelle zum Tragen.

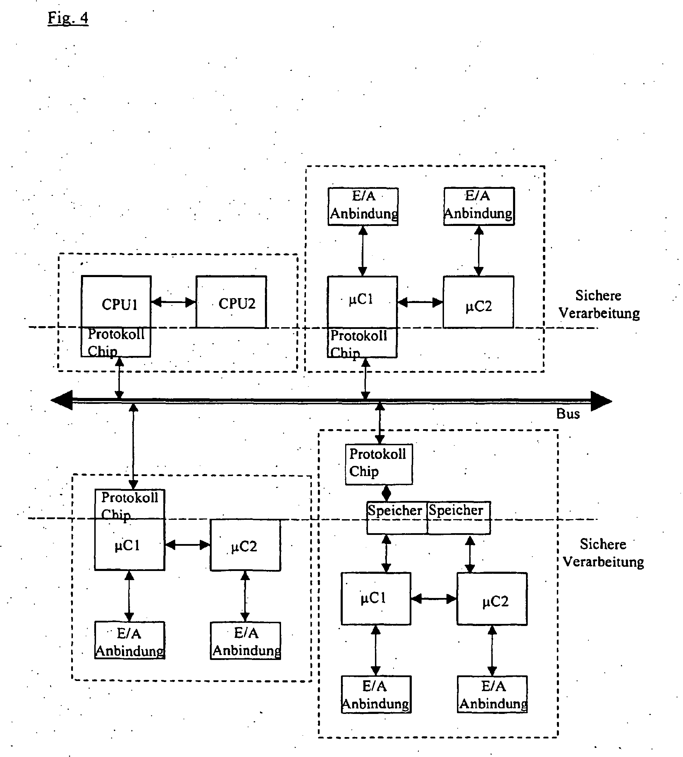

Die eine Einrichtung zur einkanaligen Übertragung von mittels zwei redundanten Rechnern gebildeten Daten betreffende Patentschrift DE 195 32 639 C2 integriert, um den Schaltungsaufwand zu verringern, die Funktion der Busankopplung in einen der beiden redundant ausgeführten Rechner. Lediglich der die Busankopplungsfunktionalität aufweisende Rechner weist somit einen Ausgabekanal auf, welchem von diesem Rechner stammende Nutzdaten und vom anderen Rechner stammende Prüfdaten zugeführt werden oder umgekehrt oder Nutz- und Prüfdaten beider Rechner ineinander verschachtelt zugeführt werden (Fig. 4). Um jedoch zu gewährleisten, dass der Rechner, der den Bus bedient, nicht in der Lage ist, Telegramme zu erzeugen, die der andere Rechner nicht beeinflussen kann, ist bei der Umsetzung ein erhöhter Aufwand bei der Sicherheitsbetrachtung erforderlich, da zum einen die Rückwirkungsfreiheit und zum anderen die Unabhängigkeit der Rechner zur Erstellung des sicheren Protokolls rachgewiesen werden muss. Die Patentschrift schlägt hierzu lediglich eine entsprechende Beschaltung bzw. Nichtbeschaltung der jeweiligen Rechnerausgänge vor.

Ferner beschreibt die DE 100 65 907 A1 ein auf dem Prinzip einer "Redundanz mit Kreuzvergleich" beruhendes Verfahren zum gesicherten Datentransport für die Datenübertragung an parallelen oder seriellen Netzwerken oder Bussystemen, wobei ein Zwischenregister mit zwei logisch identischen Datenbereichen für den Übergang von der Zweikanaligkeit zur Einkanaligkeit verwendet wird. Die vollständige einkanalig über das Bussystem zu übertragende, sicherheitsgerichtete Nachricht umfasst die Dateninhalte beider Datenbereiche des Zwischenregisters (Fig. 4). Dem Zwischenregister auf Senderseite vorgeschaltet sind wiederum zwei redundant arbeitende Rechner, die je nach Art der Applikation einkanalig oder zweikanalig zur Verfügung gestellte sicherheitsrelevante Daten jeweils mit redundanter Information zu sicheren Daten aufbereiteten und diese gegenseitig zur Überprüfung austauschen. Sofern beide zum gleichen Ergebnis gelangt sind, übergibt jeder der Rechner seine sicheren Daten dem Zwischenregister, wobei jeder Datenbereich mit den sicheren Daten jeweils eines Rechners belegt wird, die ihrerseits bereits redundante Information zur Fehlererkennung enthalten. Ist in einer alternativen Ausführungsform das Zwischenregister in einem der beiden Rechner enthalten, so dass dieser eine Rechner folglich beide Datenbereiche des Zwischenregisters nach Abstimmung mit dem zweiten Rechner entsprechend belegt, liest dieser zweite Rechner zur Kontrolle das Zwischenregister mit den beiden Datenbereichen nochmals aus. Je nach Applikation kann der Dateninhalt eines der beiden Datenbereiche des Zwischenregisters auch invertierte Daten oder andere zusätzliche Verschachtelungen aufweisen, um beispielsweise systematische Fehler in den Sendern, Empfängern und/oder anderen die Daten weiterleitenden Einheiten zu erkennen. Nachteilig hierbei ist somit insbesondere, dass die Gesamtdatenlänge der sicherheitsgerichteten Nachricht in Bezug auf die tatsächlichen Nutzdaten überaus groß ist und die Datenübertragungsrate in Bezug auf die tatsachlichen Nutzdaten somit klein ist, da für jeden zu übertragenden Nutzdatensatz zwei identische Nutzdatensätze sowie eine jeweilige redundante Information zu jedem der identischen Nutzdatensätze zu übertragen ist. Bei abnehmender Anzahl von zu übertragenden Nutzdaten je Datenpaket, wie dieses beispielsweise beim Interbus gegeben ist, verschlechtert sich das Verhältnis von Nutzdatenlänge zur Gesamtdatenlänge zunehmend.

Die deutsche Patentanmeldung 10 2004 039 932.8 des selben Anmelders, zu welcher die vorliegende Erfindung eine Weiterentwicklung darstellt, hatte sich als eine Aufgabe gestellt, für die sichere Busankopplung von sicherheitsrelevanten Prozessen einen weiteren, neuen und verbesserten Weg für den Übergang von der Mehrkanaligkeit zur Einkanaligkeit bereit zu stellen und auf eine einfach zu realisierende Weise, insbesondere auch einfach zu testende Weise, eine Rückwirkungsfreiheit und Unabhängigkeit bei der Erstellung eines sicherheitsgerichteten Protokolls, welches als Sicherheitstelegramm über einen Bus übertragen werden soll, sicher zu stellen.

Hierzu wurde vorgeschlagen, ein Verfahren zur einkanaligen Busankopplung eines sicherheitskritischen Prozesses vorzusehen, bei welchem ein für den sicherheitskritischen Prozess relevanter Datensatz über zumindest zwei redundante Verarbeitungskanäle, insbesondere protokollspezifisch, nach identischen Gesetzmäßigkeiten zu jeweils einem sicherheitsgerichteten Protokoll verarbeitet wird und die redundanten sicherheitsgerichteten Protokolle zur einkanaligen Busankopplung wieder zu einem gemeinsamen sicherheitsgerichteten Protokoll zusammengesetzt: werden, und zwar indem von jedem der Verarbeitungskanäle auf ein gemeinsames Zwischenregister zugegriffen wird, wobei für jede Registerstelle eine Schreibberechtigung nur einmal vergeben wird, derart, dass das gemeinsame sicherheitsgerichtete Protokoll, also das zu übertragende Sicherheitstelegramm, im Zwischenregister durch zwingend anteiliges Einschreiben jeweils unterschiedlicher Anteile der jeweiligen sicherheitsgerichteten Protokolle zusammengesetzt wird.

Ein wesentlicher Vorteil war hierbei folglich, dass zum einen beide Verarbeitungskanäle in der Lage sind das komplette sicherheitsgerichtete Protokoll zu berechnen, so dass dieses sich positiv auf die benötigte Telegrammlänge auswirkt, da alle Datenbits mit den unterschiedlichen Sicherungsmechanismen bereits in den redundanten Verarbeitungskanälen vorbekannt sind und keine zusätzlichen Datenbits übertragen werden müssen, die auf der Empfängerseite den Rückschluss auf die einwandfreie Berechnung zulassen. Darüber hinaus ist gewährleistet, dass ein Verarbeitungskanal alleine nicht in der Lage ist, ein Sicherheitstelegramm zu senden, wobei die Steuerung über die jeweils nur einmal vergebbare Schreibberechtigung von Daten in einer Registerstelle eine einfach zu implementierende und hoch effiziente Möglichkeit darstellt, um unabhängig vom verwendeten Bus(system) eine kostengünstige wesentlich erhöhte Sicherheit zu gewährleisten.

Die Realisierung einer intelligenten Einheit zum Durchführen des erfindungsgemäßen Verfahrens war somit bereits durch Verwendung einer wenigstens zwei redundante Rechner umfassende Vorrichtung gewährleistbar, bei welcher die Rechner zum Verarbeiten eines identischen Eingangsdatensatzes unter Anwendung identischer Gesetzmäßigkeiten zu jeweils einem sicherheitsgerichteten Protokoll ausgebildet sind und die über eine Schaltungsanordnung mit einem gemeinsamen Zwischenregister derart verbunden sind, dass für jeden Rechner eine Schreib-Zugriffsmöglichkeit für jeweils bestimmte Registerstellen und für jede Registerstelle des Zwischenregisters eine Schreib-Zugriffsmöglichkeit nur für jeweils einen der Rechner gegeben ist.

Die Erfindung ermöglichte somit bereits durch Verwendung von Standardkomponenten und unabhängig vom jeweiligen Bussystem eine einfach zu implementierende, hoch dynamische und hoch effiziente Lösung zur rückwirkungsfreien und unabhängigen Bildung eines jeweiligen sicherheitsgerichteten Protokolls.

Da jedoch das zu übertragende sicherheitsgerichtete Protokoll somit zwingend erst in dem Speicher erzeugt wird, ist eine darüber hinausgehende, weitere Steigerung der Sicherheit entweder dadurch gewährleistbar, dass vor dem Schreiben des gemeinsamen sicherheitsgerichteten Protokolls die redundant gebildeten sicherheitsgerichteten Protokolle durch die Verarbeitungskanäle zunächst auf gegenseitige Identität hin überprüft werden, so dass die Bildung eines gemeinsamen sicherheitsgerichteten Protokolls eist unter Ansprechen auf identische, unabhängig voneinander aus einem identischen Eingangsdatensatz verarbeitete sicherheitsgerichteten Protokolle erfolgt oder dadurch, dass nach dem Einschreiben jedoch vor einer Übergabe des gemeinsamen sicherheitsgerichteten Protokolls aus dem Zwischenregister, z.B. an einen Bus, von jedem der redundanten Verarbeitungskanäle auf jede Registerstelle rücklesend zurückgegriffen wird, um eine Verifikation des gemeinsam gebildeten sicherheitsgerichteten Protokolls durchführen.

Eine Aufgabe der vorliegenden Erfindung ist es nunmehr, die in der deutschen Patentanmeldung 10 2004 039 932.8 beschriebene Lösung derart weiterzuentwickeln, dass unter Beibehaltung dieser gesteigerten Sicherheit der Ankopplungsprozess bei Einschreiben des sicherheitsgerichteten Protokolls durch die sicheren redundanten Verarbeitungskanäle in einen gemeinsamen Speicher- oder Protokollbaustein schneller abgeschlossen ist, und auch bei Speicher- oder Protokollbausternen anwendbar ist, bei welchen ein Rücklesen eingescliriebener Daten nicht möglich ist.

Die erfindungsgemäße Lösung ist auf höchst überraschende Weise bereits durch einen Gegenstand mit den Merkmalen eines der anhängigen unabhängigen Ansprüche gegeben.

Vorteilhafte und/oder bevorzugte Ausführungsformen und Weiterbildungen sind Gegenstand der jeweiligen abhängigen Ansprüche.

Erfindungsgemäß ist ein Verfahren gemäß Anspruchs 1 und eine Vorrichtung gemäß Anspruchs 15 definiert. Weitere Ausführungsformen werden durch den abhängigen Ansprüchen definiert.

Ein wesentlicher Vorteil ist auch hierbei folglich, dass zum einen beide Verarbeitungskanäle in der Lage sind, das komplette sicherheitsgerichtete Protokoll zu berechnen, so dass dieses sich positiv auf die benötigte Telegrammlänge auswirkt, da alle Datenbits mit den unterschiedlichen Sicherungsmechanismen bereits in den redundanten Verarbeitungskanälen vorbekannt sind und keine zusätzlichen Datenbits übertragen werden müssen, die auf der Empfängerseite den Rückschluss auf die einwandfreie Berechnung zulassen. Darüber hinaus ist gewährleistet, dass ein Verarbeitungskanal alleine nicht in der Lage ist, ein Sicherheitstelegramm zu senden, wobei die Steuerung über die jeweils nur einmal vergebbare Schreibberechtigung von Daten in einer Registerstelle eine einfach zu implementierende und hoch effiziente Möglichkeit darstellt, um unabhängig vom verwendeten Bus(system) eine kostengünstige wesentlich erhöhte Sicherheit zu gewährleisten.

Weitere wesentliche Vorteile sind darüber hinaus, dass das erfindungsgemäße Verfahren in Bezug auf den Ankopplungsprozess schneller ist, weil eine Verifikation der einzuschreibenden Daten bzw. ein Vergleich der jeweiligen, redundant verarbeiteten, sicheren Protokolldaten auf gegenseitige Identität unmittelbar beim Schreibvorgang eines Datums oder mehrerer Daten in das Register durchgeführt wird. Die Erfindung kann somit auch auf Register bzw. Speicher angewendet werden, die ein Rücklesen nicht ermöglichen.

Die Realisierung einer intelligenten Einheit zum Durchführen des erfindungsgemäßen Verfahrens ist somit bereits durch Verwendung einer wenigstens zwei redundante Rechner umfassenden Vorrichtung gewährleistbar, bei welcher die Rechner zum Verarbeiten eines identischen Eingangsdatensatzes unter Anwendung identischer Gesetzmäßigkeiten zu jeweils einem sicherheitsgerichteten Protokoll ausgebildet sind und die über eine Schaltungsanordnung mit einem gemeinsamen (Zwischen-)Register derart verbunden sind, dass für jede Registerstelle des Registers das Einleiten eines Schreibzugriffs nur für jeweils einen der Rechner gegeben ist, und der Zugriff auf das gemeinsame Register zur Ablage der einzuschreibenden Anteile bis zur Verifikation der einzuschreibenden Anteile durch wenigstens einen weiteren der Rechner verriegelt ist.

Die Erfindung ermöglicht somit bereits durch Verwendung von Standardkomponenten und unabhängig vom jeweiligen Bussystem eine einfach zu implementierende, hoch dynamische und hoch effiziente Lösung zur rückwirkungsfreien und unabhängigen Bildung eines jeweiligen sicherheitsgerichteten Protokolls und zur Überprüfen der sicherheitsrelevanten Daten beim Schreibvorgang selbst unmittelbar vor dem Eintragen in den Speicher- oder Registerbaustein.

Die spezifischen Verarbeitungsregeln zur Bildung des Sicherheitstelegramms sind hierbei zweckmäßiger geeignet, den jeweiligen Sicherheitsanforderungen zu genügen, insbesondere den Sicherheitsanforderungen für eine einfache Übertragung gemäß SIL 3 IEC 61508.

Vorzugsweise sind die jeweiligen Schreibberechtigungen und Verifikationspflichten durch Vorgabe spezifischer Masterund/oder Slavefunktionaltäten definiert bzw. zugewiesen, wobei diese Funktionalitäten bevorzugt auch veränderbar sind und/oder nach bestimmten Zyklen gewechselt werden.
Für eine praktisch einfache Umsetzung ist ferner die Verwendung eines gemeinsamen Adressbusses und eines gemeinsamen Datenbusses vorgesehen.

Beim Schreibvorgang können somit die jeweils unter wenigstens einer Registerstelle einzuschreibenden Protokollanteile über den die entsprechende Schreibberechtigung besitzenden Verarbeitungskanal an den Datenbus übergeben werden und von dort über den wenigstens einen weiteren Verarbeitungskanal zur Verifikation gelesen werden.

Z.B. wirkt der Rechner des ersten Verarbeitungskanals für eine oder mehrer bestimmte Registerstelle/n als Master und legt die entsprechenden, von ihm berechneten sicheren Daten auf den Datenbus, wobei eine Freigabe zum Ablegen auf den Speicherbaustein noch verriegelt ist. Der Rechner des zweiten Verarbeitungskanals wirkt als Slave und prüft die auf den Datenbus gelegten Daten mit den eigenen berechneten sicheren Daten. Erst wenn die Prüfung die Übereinstimmung der Daten ergeben hat, wird die Freigabe zum Ablegen auf den Speicherbaustein durch den überprüfenden Rechner bewirkt.

Zweckmäßiger Weise ist somit zur Freigabe eines Schreibsignals, d.h. zum Aufheben der Zugriffsverriegelung, zum Ablegen der einzuschreibenden Daten auf dem Speicherbaustein zumindest die Ausgabe eines Freigabesignals durch den überprüfenden Rechner vorgesehen.

Bevorzugt ist ferner das Erfordernis eines Freigabesignals von dem schreibenden Rechner zumindest nach Übergabe der Protokollanteile an den Datenbus zur Freigabe eines Schreibsignals vorgesehen.

Zum Vorgeben einer jeweiligen Registerstelle, für welche Protokollanteile jeweils aktuell einzuschreiben sind, hat sich die Übergabe der entsprechenden Adresse an den gemeinsamen Adressbus als zweckmäßig erwiesen.

Je nach zugewiesenen Master-/Slavefunktionaitäten erfolgt die Übergabe einer Adresse zur Bestimmung einer Registerstelle und das Schreiben von Protokollanteilen für diese Registerstelle über den selben Verarbeitungskanal oder über unterschiedliche Verarbeitungskanäle.

Zur Funktionsüberwachung der Verarbeitungskanäle und/oder der Rechner ist ferner in bevorzugter Weise eine mit den Verarbeitungskanälen und/oder Rechnern und dem Zwischenregister verbundene Watchdog-Komponente umfasst.

Bevorzugt ist ferner das Erfordernis eines Freigabesignals von der Watchdog-Komponente zur Freigabe des Zugriffs auf das gemeinsame Zwischenregister zur Ablage von einzuschreibenden Anteilen ein Freigabesignal. Iiegt dieses nicht vor, z.B. bei Ausfall oder Fehler eines Rechners, kann in Folge dessen auch kein vollständiges Sicherheitstelegramm erzeugt werden, so dass zwangsläufig auf Fehler erkannt wird und eine sicherheitsgerichtete Funktion auslösbar ist. Auch Testprozeduren sind hierdurch in praktisch einfacher Weise durchführbar.

Insbesondere für eine Synchronisation zwischen den Rechnern, sind die an und für sich gegenseitig entkoppelten Rechner ferner bevorzugt über eine Kommunikationsschnittstelle mit einander verbunden.

Insbesondere, um nach einer jeweils protokollspezifischen Verarbeitung der Eingangsdaten zu einem sicherheitsgerichteten Protokoll deren Speicherung und protokollspezifische Übergabe an den Bus zu gewährleisten, wobei das sicherheitsgerichteten Protokoll den auf der jeweiligen Anwendung basierten Vorgaben, insbesondere in Abhängigkeit des Busses und/oder der Prozesse, an einen sicheren Protokolldatensatz genügt, umfasst ein Rechner gemäß einer Ausführungsform jeweils einen integrierten Protokollchip. In alternativer Ausbildung kann dar Protokollchip auch ausgangseitig an einen Rechner angeschaltet sein. Zur Vermeidung derartiger, integrierter oder nachgeschalteter, Protokollchips und folglich auch zur Bauteil- und Kostenreduzierung ist in weiterer, besonders zweckmäßiger Ausführung vorgeschlagen, den Rechner mit einer zur Verarbeitung und protokollspezifischen Übergabe der Daten entsprechend ausgebildeten Software bereitzustellen.

Die erfindungsgemäße Vorrichtung kann als Busteilnehmereinheit ausgebildet sein, wobei die Rechner hierzu zweckmäßiger Weise eingangsseitig wenigstens mit Eingangskanälen zur ein- oder mehrkanaligen Anbindung von Prozessdaten-Eingabeeinheiten und entsprechend zur ein- oder mehrkanaligen Erfassung von zu verarbeitenden sicherheitsrelevanten Eingangsdaten verschaltet sind oder als Bus-Steuerungseinheit, welche z.B. die zu verarbeitenden sicherheitsrelevanten Eingangsdaten generiert, ausgebildet ist. Die Rechner sind somit insbesondere als Mikro-Controller oder als zentrale Prozesseinheiten (CPUs) ausgebildet.

Die Schaltungsanordnung zur erfindungsgemäßen Anbindung der Rechner oder gegebenenfalls der den Rechnern nachgeschalteten Protokollchips ist bei einer bevorzugten Ausführungsform als einfache Logikschaltung ausgebildet, wobei auch hochintegrierte Schaltkreise, z.B. in Form eines FPGA (Field Programmable Gate Array), verwendbar sind und applikationsspezifisch von zusätzlichem Vorteil sein können.

Das Zwischenregister weist eine Schnittstelle auf, über welche das dort hinterlegte gemeinsame sicherheitsgerichteten Protokoll einkanalig direkt in den Bus, z.B. einen Interbus, einkoppelbar ist oder einkanalig an eine anwendungsspezifisch ausgebildete weitere vor den Bus geschaltete Busankopplungseinrichtung übergeben werden kann, wobei als Busankopplungseinrichtung applikationsspezifisch insbesondere ein weiterer Protokollchip, ein weiterer Mikro-Controller oder eine sonstige intelligente Einheit verwendet sein kann.

Als Zwischenregister ist somit bereits ein Standard-RAM ausreichend. In bevorzugter Weiterbildung ist jedoch insbesondere vorgesehen, das Zwischenregister bzw. den Zwischenspeicher in Form eines Dualportmemory (DPM) auszubilden, so dass auf einfachste und kostengünstige Weise über einen der beiden Schnittstellen-Ports die Rechner anschaltbar sind und über den zweiten Schnittstellen-Port die einkanalige Ankopplung an den Bus erfolgen kann. In besonders zweckmäßiger Weise ist auch der Einsatz von rücklesungsfeindlichen Speicherbausteinen, wie z.B. ein serieller Register Erweiterungschip, durch die Erfindung ermöglicht.

Weitere Merkmale und Vorteile der Erfindung werden aus der nachfolgenden, detaillierten Beschreibung einer bevorzugten, jedoch lediglich beispielhaften Ausführungsform der Erfindung unter Bezugnahme auf die beigefügten Zeichnungen ersichtlich.

In den Zeichnungen zeigen:
- Fig. 1: eine schematische Prinzipskizze zur recundanten Bildung von sicherheitsgerichteten Protokollen für ein zu übertragendes Sicherheitstelegramm mittels redundanter Verarbeitungskanäle und anschließender Bildung eines gemeinsamen identischen sicherheitsgerichteten Protokolls unter Berücksichtigung aller redundanten sicherheitsgerichteten Protokolle und unter Steuerung einer Schreib- und Verifikati.onsregel betreffend die aus den sicherheitsgerichteten Protokollen jeweils zu übergebenden/übernehmenden Anteile;
- Fig. 2: ein mögliches Funktionsschaltbild einer Umsetzung der Erfindung, basierend auf zwei jeweils das vollständige, sicherheitsgerichtete Protokoll redundant berechnenden Mikro-Controllern, und
- Fig. 3 u. 4: bekannte Realisierungen für den Übergang von der Zweikanaligkeit zur Einkanaligkeit.

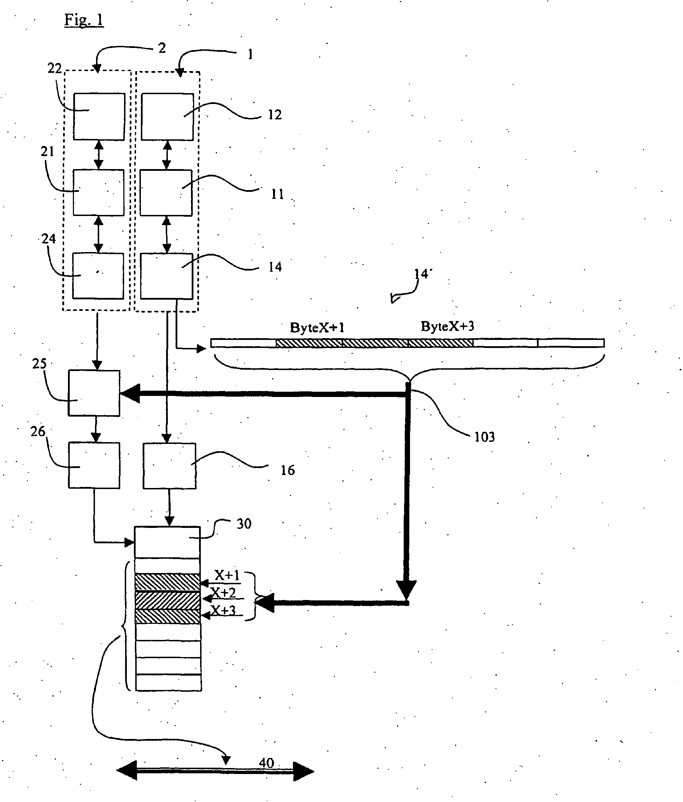

Bei Figur 1 dargestellt sind zwei redundante Verarbeitungskanäle 1 und 2 einer nicht näher dargestellten Busteilnehmereinheit oder Bus-Steuerungseinheit zur einkanaligen Ankopplung eines sicherheitskritischen Prozesses an einen Bus 40, z.B. einen Interbus. Im Fall einer Busteilnehmereinheit ist jeder der Verarbeitungskanäle mit, dem sicherheitskritischen Prozess zugeordneten, gleichermaßen nicht dargestellten Ein- /Ausgabeeinheiten, wie z.B. Sensoren und/oder Aktoren, verbunden.

Einer Busteilnehmereinheit mit sensor-seitiger Applikation werden somit je nach Art der spezifischen Anbindung einkanalig oder zweikanalig den Verarbeitungskanälen 1 und 2 identische, für den sicherheitskritischen Prozess relevante Eingangsdaten zur Verfügung gestellt und zweckmäßigerweise zunächst in Speicher 12 bzw. 22 zur weiteren Verarbeitung abgelegt. Insbesondere im Fall einer Bus-Steuerungseinheit befinden sich die zu sichernden Daten, also vor einer Busübertragung wie nachfolgend beschrieben aufzubereitende sicherheitsrelevante Eingangsund/oder Ausgangsdaten, in Speichern 12 bzw. 22.

Die Eingangs- und/oder Ausgangsdaten werden zunächst vor der einkanaligen Übertragung eines Sicherheitstelegramms über den Bus 40, redundant unter Anwendung gleicher Gesetzmäßigkeiten zu jeweils einem sicherheitsgerichteten Protokoll 14 und 24 verarbeitet. Die Verarbeitungskanäle 1 und 2 umfassen hierzu jeweils einen Mikro-Controller 11 bzw. 21 zur jeweiligen Aufbereitung/Verarbeitung der in dem Speicher 12 oder 22 befindlichen sicherheitsrelevanten Eingangs- und/oder Ausgangsdaten zu dem sicherheitsgerichteten Protokoll 14 bzw. 24. Die von den Micro-Controllern 11 und 21 berechneten sicherer Protokolle 14 oder 24 können jeweils in einem dem Mikro-Cortroller 11 oder 21 nachgeschalteten Protokollchip abgelegt sein, der das von dem jeweiligen Mikro-Controller 11 oder 21 berechnete, sicherheitsgerichtete Protokoll 14 bzw. 24 zur weiteren Übergabe an den Bus 40 erhält. In alternativer Ausführung können die Mikro-Controller 11 und 21. auch eine entsprechend ausgebildete Software umfassen, so dass die weitere, nachfolgend beschriebene Übergabe der berechneten Protokolle 14 und 24 an den Bus 40 durch die Mikro-Controller 11 und 21 selbst erfolgt.

Die berechneten, sicheren bzw. sicherheitsgerichteten Protokolle 14 und 24 sind folglich, sofern bei der Berechnung kein Fehler oder Ausfall aufgetreten ist, identisch. Es sei darauf hingewiesen, dass die sicheren Protokolle hierbei selbstverständlich so aufgebaut sind, dass diese den Anforderungen der Norm an eine sicherheitsgerichtete Übertragung genügen.

Zur weiteren Erhöhung der Sicherheit ist erfindungsgemäß vor Übertragung eines sicheren Telegramms über den Bus 40 die gemeinsame Bildung eines weiteren identischen, gemeinsamen sicherheitsgerichteten Protokolls vorgesehen, das anschließend einkanalig an den Bus 40 zur Übertragung übergeben werden kann. Dieses gemeinsame sicherheitsgerichtete Protokoll wird unter Beteiligung beider redundanter Verarbeitungskanäle 1 und 2 und unter Berücksichtigung der Daten des sicheren Protokolls 14 und der Daten des sicheren Protokolls 24 in einem Zwischenspeicher oder Zwischenregister 30 gebildet, auf den jeder der Verarbeitungskanäle 1 und 2 zugreifen kann.

Um zu verhindern, dass dieses gemeinsam zu bildende sicherheitsgerichtete Protokoll lediglich unter Berücksichtigung berechneter Daten aus nur einem der Verarbeitungskanäle 1 oder 2 aufgebaut wird, welches folglich dem Senden eines Sicherheitstelegramms nur durch einen der Mikro-Controller 11 oder 21 gleichkäme, z.B. aufgrund eines auftretenden Ausfalles eines der beiden Mikro-Controller, steuert eine definierte oder definierbare Zugriffsregel die Schreibrechte auf dem Zwischerspeicher 30. Die Zugriffsregel bestimmt hierzu, dass von jedem Verarbeitungskanal 1 und 2 aus nur Teile des jeweils berechneten sicherheitsgerichteten Protokolls beim Schreiben für das Bilden des gemeinsamen sicherheitsgerichteten Protokolls in entsprechende Speicherstellen des Zwischenspeichers 30 abgelegt. werden können, wenn der jeweilige Mikro-Controller 11 oder 21 eine Schreibberechtigung für die jeweiligen Speicherstellen hat und die einzuschreibenden Daten mit den entsprechenden berechneten Daten aus dem jeweils anderen Verarbeitungskanal identisch sind. Für jede Speicher- oder Registerstelle wird daher erfindungsgemäß nur jeweils eine Schreibberechtigung definiert und während des Schreibens zusätzlich noch eine Verifikation der einzuschrerbenden Daten durchgeführt.
Hierdurch ist folglich ein äußerst effektiver Verriegelungsmechanismus realisiert, der beim Schreiben eines jeweiligen Datums nur dann den Zugriff auf den Zwischenspeicher 30 zur Ablage in einer entsprechenden Speicherstelle zulässt, wenn das einzuschreibende Datum aus dem Verarbeitungskanal 1 bzw. 2 stammt, der für diese Speicherstelle die Schreibberechtigung hat und beide berechneten sicheren Protokolle 14 und 24 identisch sind.

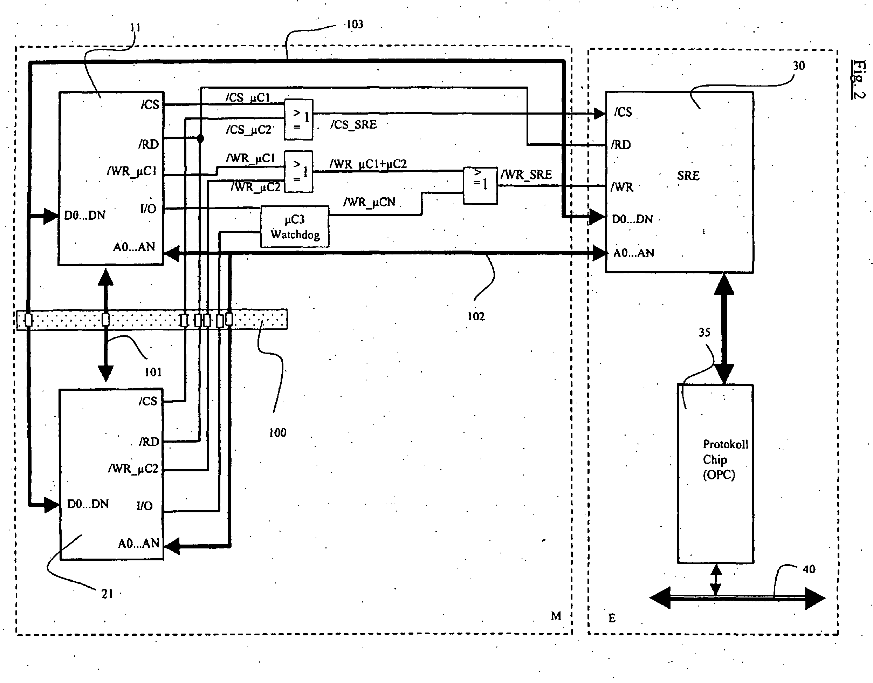

Die Erfindung sieht hierzu bevorzugt vor, dass jeweils einer der Micro-Controller 11, 21 als Master und der jeweils andere als Slave fungiert, wobei beide Micro-Controller 11 und 21 über einen gemeinsamen Datenbus 103 und Adressbus 102 (Fig. 2) an dem Zwischenspeicher 30 angeschlossen sind. Zweckmäßiger Weise bestimmt der Master die Speicherstelle(n), für welche jeweils ein Datum oder mehrere Daten einzuschreiben sind. Ferner bestimmt der Master in bevorzugter Ausführung jeweils denjenigen Micro-Controller, der einschreibt und der beim Einschreiben die Verifikation durchführt.

Ist z.B. gemäß Fig. 1 der Micro-Controller 11 der Master und der Micro-Controller 21 der Slave, legt in dem dargestellten Fall der Master 11 die der bestimmten Speicherstelle(n) entsprechende(n) Adresse(n) auf den Adressbus 102 (Fig. 2) und das/die zu dieser Adresse(n) von ihm selbst berechnete(n) Datum/Daten des sicheren Protokolls 14 auf den Datenbus 103 (Fig. 1). Gemäβ Fig. 1 gibt der Master 11 die Speicheradressen für das Byte X+1, das Byte X+2 und das Byte X+3 vor und legt sein berechnetes Byte X+1, Byte X+2 und Byte X+3 auf den Datenbus 103. Diese auf den Datenbus 103 gelegten Daten, bei Fig. 1 mit 14'gekennzeichnet, werden vom Slave 21 mit den eigenen, selbst berechneten Daten für die angelegte Adresse verglichen, wie mit der Bezugsziffer 25 bei Fig. 1 angezeigt. Bei Übereinstimmung der Daten überträgt der Slave 21 ein Freigabesignal 26 an den Zwischenspeicher 30, woraufhin das Schreibsignal für den Speicher freigegeben wird. Unter Ansprechen auf das Freigabesignal 26 erfolgt somit die Übernahme des sicheren Protokollanteils 14' vom Datenbus 103 in den Speicher 30.

Führt diese "Verifikation" zu einem ungleichen Ergebnis, wird zwangsläufig auf Fehler erkannt und eine sicherheitsgerichtete Funktion eingeleitet.

Bei der bei Fig. 1 dargestellten Ausführungsform erfolgt optional auch vom Master 11 ein Freigabesignal 16, nachdem er sein berechnetes sicheres Protokollanteil auf den Datenbus 103 gelegt hat. Folglich erfolgt die Übernahme nur, wenn beide Freigaben vorliegen, welches zu einer noch weitergehenden Erhöhung der Sicherheit führt.

Hierbei erfolgt somit ein Vergleich des sicheren Protokolls unmittelbar beim Schreiben eines Datums oder mehrerer Daten jedoch vor der Ablage im Speicher 30. Da der Vergleich beim Schreiben durchgeführt wird, arbeitet das erfindungsgemäße Verfahren schneller als bei bisher bekannten Verfahren, welche einen Vergleich vor dem Schreiben oder nach dem Schreiben durch Rücklesung durchführen. Ferner kann dieses Verfahren auch auf Speichermedien sicher angewandt werden kann, die nicht rückgelesen werden können, wie beispielsweise bei SRE-Bausteinen.

Ein vollständiger Lesezugriff auf den Speicher ist somit nicht mehr zwingend notwendig.

Die Erfindung umfasst ferner Ausführungsformen, bei denen ein wechselseitiges Verhalten der Micro-Controller vorgenommen wird, d. h. der als Master arbeitende Micro-Controller legt die Adresse an und der als Slave wirkende Micro-Controller legt anschießend die entsprechenden sicheren Daten auf den Datenbus. Daraufhin vergleicht der Master die sicheren Daten mit den eigenen selbst berechneten und gibt bei Übereinstimmung das entsprechende Schreibsignal frei.

Auch ein zyklischer Wechsel ist denkbar, wobei abwechselnd jeder der Micro-Controller mal als Master und mal als Slave fungiert.

Ferner kann z.B. auch vom Master das vollständige berechnete sichere Protokoll insgesamt auf den Datenbus und die entsprechenden Adressen der Speicherstellen auf den Adressbus gelegt werden, so dass der Slave das vollständige, auf den Datenbus gelegte sichere Protokoll mit dem eigenen, selbst berechneten sicheren Protokoll insgesamt vergleicht.

Eine jeweilige Schreibberechtigung wird somit bevorzugt über einen Master-Slave-Mechanismus definiert.

Als Zwischenspeicher ist somit neben einem bereits ausreichenden Standard-RAM oder Standard-DPM auch ein nicht-rücklesbarer Speicher, wie z.B. ein Serieller Register-Erweiterungschip (SRE) einsetzbar.

Der Zwischenspeicher 30 kann über eine weitere Schnittstelle verfügen, mit der das in diesem Speicher abgelegte, gemeinsam gebildete sichere Protokoll bzw. die sichere Nachricht zur Übertragung an einen Protokollchip oder an eine sonstige intelligente Einheit übergaben werden kann, von der aus z.B. die einkanalige Einkopplung an den Bus 40 erfolgt.

Figur 2 stellt beispielhaft, jedoch unter Verwendung von vorbeschriebener Software anstelle von Protokollchips, ein mögliches Funktionsschaltbild einer Umsetzung der in Figur 1 skizzierten Schreibberechtigung sowie der Vergleichs- und Freigabemechanismen als Basis für die erfindungsgemäße Verifikation während des schreibvorgangs dar.

Wie bei Figur 2 zu sehen, umfasst der links dargestellte, mit M gekennzeichnete Bereich die erfindungsgemäße mehrkanalige Architektur mit Sicherheitsbetrachtung und der bei Figur 2 mit E gekennzeichnete rechte Bereich die einkanalige Architektur mit dem als sicherheitstelegramm zu übertragenden, gemeinsam gebildeten sicherheitsgerichteten Protokoll. Die Sicherheitsbetrachtung der redundanten Architektur endet mit dem Vergleich und Ablegen der sicheren Nachrichten bzw. des sicheren Protokolls auf dem Speicher 30, da ab dort der Sicherungsmechanismus des sicheren Protokolls greift, denn die ab hier möglichen Fehler werden für eine Übertragung grundsätzlich unterstellt und betrachtet und müssen folglich auch beherschbar sein. Ein hierfür in Betracht kommender Fehler aus dem Grundsatz für die Prüfung und Zertifizierung von "Bussystemen für die Übertragung sicherheitsrelevanter Nachrichten" ist z.B. eine eine Nachrichtenverfälschung.

Somit im Wesentlichen basierend auf Figur 1 sind die beiden Mikro-Prozessoren 11 und 21 über an sich bekannte Art und Weise entkoppelt, bei Figur 2 mit der Bezugsziffer 100 gekennzeichnet, und ferner über eine Kommunikationsschnittstelle 101 zur zusätzlichen gegenseitigen Überprüfung der jeweils separat berechneten sicherheitsgerichteten Protokolle 14 und 24 vor einem Schreiben von Daten zum gemeinsamen Bilden eines sicheren Protokolls auf dem Speicher 30 und/oder zur gegenseitigen Synchronisation miteinander verbunden.

Die Micro-Controller 11 und 21 sind über einen gemeinsamen Adressbus 102 für die Adresse Ax mit x zwischen 0 und N und einem gemeinsamen Datenbus 103 für die Daten Dx mit x zwischen 0 und N direkt an die entsprechenden Pins des bei Fig. 2 dargestellten SRE-Bausteins 30 als Speicher angeschlossen. Der SRE-Baustein 30 verfügt über eine weitere Schnittstelle, über welche ein nachgeordneter Protokollchip 35, aber auch ein im Wesentlichen beliebiger weiterer Speicher, ein Micro-Controller oder ähnliches applikationsspezifisch angeschaltet sein kann.

Im vorliegenden Fall ist ein OPC (Optical Protocol Chip) als Protokollchip angeschaltet, der wiederum mit dem Bus 40 gekoppelt ist. Der SRE-Baustein 30 dient folglich auch der Erweiterung der Datenbreite des OPC-Protokollchips 35.

Die Signale /CS (Chipselect) beider Micro-Controller 11 und 21, bei Fig. 2 als /CS_µC1 bzw. /CS_µC2 gekennzeichnet, sind logisch UND verknüpft. Dieses entspricht hierbei aufgrund der negativen Logik der /CS-Signale einem OR-Gatter. Somit kann das Signal /CS_SRE des SRE's nur aktiviert werden, wenn beide Micro-Controller 11 und 21 ihr /CS-Signal auf low legen.

Entsprechend den /CS-Signalen sind auch die Schreibsignale, also die /WR-Signale beider Micro-Controller 11 und 21, bei Fig. 2 als /WR_µC1 bzw. /WR_µC2 gekennzeichnet, logisch UND verknüpft, welches wiederum einem OR-Gatter entspricht. Das aus der Verknüpfung des /WR_µC1 und /WR_µC2 resultierende Signal /WR_µC1+µC2 ist in dem dargestellten Beispiel nochmals mit dem Signal eines weiteren Micro-Controllers µC3 logisch UND verknüpft, so dass auch dieser Micro-Controller sein Schreibsignal /WR_µC3 auf low legen muss, bevor ein Schreibsignal an den SRE anliegen kann. Dieses kann z.B. die generelle und/oder abschließende Freigabe mittel einer Watchdog-Schaltung sein.

Somit kann das /WR_SRE-Signal des SRE's nur dann aktiviert werden, wenn beide Micro-Controller 11 und 21 ihr Schreibsignal auf low legen und zusätzlich die Freigabe des die Watchdog-Schaltung bereitstellenden dritten Micro-Controllers µC3 vorliegt.

Folglich ist auch auf einfache Weise die Überwachung und Sicherstellung der im vorliegenden Beispiel mittels der Master-Slave-Aufteilung der Micro-Controller 11 und 21 definierten Schreibberechtigung und Vergleichsfunktionalität ermöglicht, denn beim Schreiben und Vergleichen jeweils generierte Impulse oder Impulsfolgen können mittels einem so oder ähnlich als Watchdog-Schaltung zwischengekoppelten Mircro-Controllers µC3 zuverlässig überwacht werden.

Haben beide Micro-Controller 11 und 21 jeweils ihre sichere Nachricht berechnet, so legt beispielsweise der Micro-Controller 11 eine Adresse auf den Adressbus 102 und anschließend die Daten auf den Datenbus 103. Gleichzeitig setzt er das /CS_µC1-Signal und das /WR_µC1 Signale auf low. Dies entspricht der Freigabe zum Schreiben der Daten auf den Speicher 30 aus Sicht des Micro-Controllers 11. Ein Zugriff auf den Speicher 30 zur Ablage des/r einzuschreibenden Datums/Daten ist jedoch aufgrund der Schaltung nach Fig. 2 wegen der fehlenden Freigabe von dem zweiten Micro-Controller 21 noch nicht möglich.

Der Micro-Controller 21 vergleicht nun das Datum oder die Daten von dem Micro-Controller 11 für die entsprechende Speicherstelle mit dem entsprechenden, selbst berechneten sicheren Protokollteil für diese Speicherstelle. Sind diese Daten identisch, so erfolgt die Freigabe vom Micro-Controller 21 für das /CS-Signal, d.h. /CS_µC2 wird auf low gesetzt, und anschließend die Freigabe für das /WR-Signal, so dass /WR_µC2 auf low gesetzt wird.

Wenn die Watchdoch-Schaltung µC3 nicht zugeschlagen hat und also die tatsächliche Impulsfolge gleich der definierten ist, d.h. das Signal /WR_µC3 ist low, kann die Ablage der einzuschreibenden Daten auf den Speicher erfolgen, da alle Freigaben vorliegen und somit sowohl das /CS_SRE-Signal und das /WR_SRE-Signal jeweils auf low liegen.

Je nach verwendetem Speicherbaustein und definierten Leseberechtigungen, kann ausgehend vom vorliegend dargestellten Ausführungsbeispiel ferner bei in umgekehrter Richtung empfangenen sicheren Protokollen oder Nachrichten grundsätzlich ein auf dem Speicher 30 abgelegtes sicheres Protokoll nur dann von einem Micro-Controller gelesen werden, wenn dieser sein /RD-Signal aktiviert und beide Micro-Controller ihr /CS-Signal aktivieren.

Der beschriebene Ablauf setzt somit eine Erwartungshaltung und Synchronisation zwischen den Micro-Controllern voraus, um ein gültiges sicheres Protokoll im Speicher 30 ablegen zu können, welches ein wesentlicher Aspekt zur Erreichung der geforderten Sicherheit.

Das bei Figur 2 dargestellte Funktionsschaltbild ist bereits durch eine einfache Logikschaltung realisierbar, kann jedoch beispielsweise auch durch ein FPGA realisiert sein. Ferner ist selbstverständlich anstelle des bei Figur 2 dargestellten SRE 30 auch ein einfaches Standacd-RAM eingesetzbar. Für einen Fachmann ist es ersichtlich, dass die bei Fig. 2 dargestellte Schaltungsanordnung nur eine der möglichen technischen Umsetzung darstellt. Eine Schreib-Zugriffregel und der Verifikationsmechanismus während des Schreibens gemäß der Erfindung ist ferner für mehr als nur zwei redundante Rechner/Verarbeitungskanäle anwendbar. So sind z.B. bei einer Ankopplung eines sicherheitskritischen Prozesses aus einer mehr als nur zweikanaligen Umgebung auf eine einkanalige. Umgehung entsprechend auch mehr als nur zwei redundante Micro-Controller an dem Vergleich, der Verriegelung und der Freigabe beteiligt.

## Patentansprüche

1. Verfahren zur Ankopplung eines sicherheitskritischen Prozesses aus einer sicheren, wenigstens zwei redundante Verarbeitungskanäle aufweisenden Umgebung an eine nicht sichere Umgebung oder eine sichere Umgebung, die jedoch weniger Verarbeitungskanäle aufweist, bei welchem ein für den sicherheitskritischen Prozess relevanter Datensatz über die zumindest zwei redundanten Verarbeitungskanäle (1, 2) nach identischen Gesetzmäßigkeiten zu jeweils einem sicheren Protokoll (14, 24) verarbeitet wird, und
unter Berücksichtigung zumindest zweier redundanter sicherer Protokolle (14, 24) zur Ankopplung ein gemeinsames sicheres Protokoll gebildet wird, und zwar indem über jeden der Verarbeitungskanäle (1, 2) auf ein gemeinsames Zwischen-Register (30) zugegriffen wird, wobei für jede Registerstelle eine Schreibberechtigung nur einmal vergeben wird,
**dadurch gekennzeichnet, dass** beim Schreibvorgang zumindest von Anteilen (14') des gemeinsamen sicher Protokolls über einen schreibberechtigten Verarbeitungskanal (1), diese Anteile (14') über wenigstens einen weiteren Verarbeitungskanal (2) zunächst auf gegenseitige Identität hin überprüft (25) werden, und der Zugriff auf das gemeinsame Zwischen-Register zur Ablage dieser Anteile nur bei gegenseitiger Identität freigegeben wird.

2. Verfahren nach vorstehendem Anspruch, ferner **dadurch gekennzeichnet, dass** die jeweiligen Schreibberechtigungen und Verifikationspflichten durch Vorgabe spezifischer Master- und/oder Slavefunktionalitäten für die Verarbeitungskanäle (1, 2) bestimmt werden.

3. Verfahren nach vorstehendem Anspruch, ferner **dadurch gekennzeichnet, dass** die spezifischen Master- und/oder Slavefunktionalitäten für die verarbeitungskanäle (1, 2) nach bestimmten Zyklen gewechselt werden.

4. Verfahren nach einem der vorstehenden Ansprüche, ferner
**dadurch gekennzeichnet, dass** über jeden der Verarbeitungskanäle (1, 2) auf den selben, mit dem Zwischenregister verbundenen Adressbus (102) und auf den selben, mit dem Zwischenregister verbundenen Datenbus (103) zugegriffen wird.

5. Verfahren nach vorstehendem Anspruch, ferner **dadurch gekennzeichnet, dass** beim Schreibvorgang die jeweils unter wenigstens einer Registerstelle einzuschreibenden Protokollanteile (14') über den die entsprechende Schreibberechtigung besitzenden Verarbeitungskanal (1) an den Datenbus (103) übergeben werden und von dort über den wenigstens einen weiteren Verarbeitungskanal (2) zur verifikation gelesen werden.

6. Verfahren nach vorstehendem Anspruch, ferner **dadurch gekennzeichnet, dass** über den wenigstens einen, die Verifikation durchführenden Verarbeitungskanal (2) nach erfolgter Verifikation ein Freigabesignal (26) zur Freigabe des Schreibsignals für das Zwischen-Register ausgegeben wird.

7. Verfahren nach einem der zwei vorstehenden Ansprüche, ferner **dadurch gekennzeichnet, dass** über den einschreibenden Verarbeitungskanal (1) nach Übergabe der Protokollanteile an den Datenbus (103) ein Freigabesignal (16) ausgegeben wird.

8. Verfahren nach einem der vier vorstehenden Ansprüche, ferner **dadurch gekennzeichnet, dass** eine jeweilige Registerstelle zum Einschreiben von Protokollanteilen über einen der Verarbeitungskanäle (1, 2) durch Übergabe der entsprechenden Adresse an den Adressbus (102) vorgegeben wird.

9. Verfahren nach vorstehendem Anspruch, ferner **dadurch gekennzeichnet, dass** die Übergabe einer Adresse zur Bestimmung einer Registerstelle und das Schreiben von Protokollanteilen für diese Registerstelle über den selben Verarbeitungskanal oder über unterschiedliche Verarbeitungskanäle durchgeführt wird.

10. Verfahren nach einem der vorstehenden Ansprüche, ferner **dadurch gekennzeichnet, dass** zur Funktionsüberwachung der Verarbeitungskanäle (1, 2) eine zwischen den Verarbeitungskanälen (1, 2) und dem Zwischenregister geschaltete Watchdog-Komponente verwendet wird.

11. Verfahren nach vorstehendem Anspruch, ferner **dadurch gekennzeichnet, dass** von der Watchdog-Komponente zur Freigabe des Zugriffs auf das gemeinsame zwischenregister zur Ablage von einzuschreibenden Anteilen ein Freigabesignal benötigt wird.

12. Verfahren nach vorstehendem Anspruch, ferner **dadurch gekennzeichnet, dass** als Zwischenregister (30) ein Standard-RAM, ein Standard-DPM, oder ein rücklesungsfeindlicher Speicher-/Protokollbaustein, insbesondere ein serieller Register Erweiterungschip verwendet wird.

13. Verfahren nach einem der vorstehenden Ansprüche, ferner **dadurch gekennzeichnet, dass** das gemeinsame sichere Protokoll aus dem Zwischenregister (30) einkanalig an eine weitere anwendungsspezifisch ausgebildete Ankopplungseinrichtung (35) übergeben wird.

14. Verfahren nach einem der vorstehenden Ansprüche, welches zur einkanaligen Busankopplung des sicherheitskritischen Prozesses verwendet wird.

15. Vorrichtung zur Ankopplung eines sicherheitskritischen Prozesses aus einer sicheren, wenigstens zwei redundante Verarbeitungskanäle aufweisenden Umgebung an eine nicht sichere Umgebung oder eine sichere Umgebung, die jedoch weniger Verarbeitungskanale aufweist, umfassend wenigstens zwei redundante Rechner (11, 21) zum, Verarbeiten eines identischen Eingangsdatensatzes unter Anwendung identischer Gesetzmäßigkeiten zu jeweils einem sicheren Protokoll (14, 24), und
eine Schaltungsanordnung zum Verbinden jedes Rechners (11, 21) mit einem gemeinsamen Zwischenregister (30) derart, dass für jede Registerstelle des Zwischenregisters (30) eine Schreib-Zugriffsmöglichkeit nur für jeweils einen der Rechner gegeben ist, und der Zugriff auf das gemeinsame Zwischenregister für eine Ablage von einzuschreibenden Anteile bis zur Verifikation der einzuschreibenden Anteile durch wenigstens einen weiteren Rechner verriegelt ist.

16. Vorrichtung nach vorstehendem Anspruch, ferner **dadurch gekennzeichnet, dass** den Rechnern jeweilige Schreibberechtigungen oder Verifikationspflichten durch spezifische, auch veränderbare, Master- und/oder Slavefunktionalitäten zugewiesen sind.

17. Vorrichtung nach einem der Ansprüche 15 oder 16, ferner **dadurch gekennzeichnet, dass** die Schaltungsanordnung einen gemeinsamen Adressbus (102) und einen gemeinsamen Datenbus (103) umfasst.

18. Vorrichtung nach einem der vorstehenden Ansprüche 15 bis 17, ferner **dadurch gekennzeichnet, dass** die Rechner (11, 21) über eine Kommunikationsschnittstelle (101) mit einander verbunden sind.

19. Vorrichtung nach einem der vorstehenden Ansprüche 15 bis 18, ferner **dadurch gekennzeichnet, dass** die Schaltungsanordnung zur Freigabe eines Schreibsignals zum zugreifen auf das Register ein Freigabesignal (26) des die Verifikation durchführenden Rechners erfordert.

20. Vorrichtung nach vorstehendem Anspruch, ferner **dadurch gekennzeichnet, dass** die Schaltungsanordnung zur Freigabe eines Schreibsignals zum zugreifen auf das Register ein Freigabesignal (16) des schreibenden Rechners erfordert.

21. Vorrichtung nach einem der vorstehenden Ansprüche 15 bis 20, ferner **dadurch gekennzeichnet, dass** die Schaltungsanordnung zur Funktionsüberwachung der Rechner (11, 21) eine mit den Rechnern (11, 21) und dem Zwischenregister verbundene Watchdog-Komponente umfasst.

22. Vorrichtung nach vorstehendem Anspruch, ferner **dadurch gekennzeichnet, dass** die Freigabe des Zugriffs auf das gemeinsame Zwischenregister zur Ablage von einzuschreibenden Anteilen nur unter Ansprechen auf ein Freigabesignal der Watchdog-Komponente erfolgt.

23. Vorrichtung nach einem der vorstehenden Ansprüche 15 bis 22, ferner **dadurch gekennzeichnet, dass** die Rechner (11, 21) jeweils einen integrierten Protokollchip umfassen oder ausgangseitig mit einen Protokollchip (13, 23) verbunden sind oder eine die Funktion des Protokollchips bereitstellende Software umfassen.

24. Vorrichtung nach einem der vorstehenden Ansprüche 15 bis 23, ferner **dadurch gekennzeichnet, dass** die Vorrichtung als Busteilnehmereinheit ausgebildet ist und die Rechner eingangsseitig wenigstens mit Eingangskanälen zur Anbindung von Prozessdaten-Eingabeeinheiten verschaltet oder, dass die Vorrichtung als Bus-Steuerungseinheit ausgebildet ist.

25. Vorrichtung nach einem der vorstehenden Ansprüche 15 bis 24, dass die Schaltungsanordnung in einfacher Logik oder als FPGA ausgebildet ist.

26. Vorrichtung nach vorstehendem Anspruch, ferner **dadurch gekennzeichnet, dass** das Zwischenregister (30) ein Standard-RAM, ein Standard-DPM oder ein rücklesungsfeindlicher Speicher, insbesondere ein serieller Register Erweiterungschip, ist.

27. Vorrichtung nach einem der vorstehenden Ansprüche 15 bis 26, ferner **dadurch gekennzeichnet, dass** das Zwischenregister (30) eine Schnittstelle für eine direkte einkanaligen Busankopplung oder zur einkanaligen Anbindung an eine anwendungsspezifisch ausgebildete Busankopplungseinrichtung (35) aufweist.

28. Vorrichtung nach einem der vorstehenden Ansprüche 15 bis 27, welche für eine einkanalige Busankopplung des sicherheitskritischen Prozesses angepasst ist.

## Claims

1. Method for the coupling of a safety-critical process from a safe environment comprising at least two redundant processing channels to an environment which is unsafe or to a safe environment but which comprises fewer processing channels, in which a data record which is relevant for the safety-critical process is processed to form a respective safe protocol (14, 24) using the at least two redundant processing channels (1, 2) in accordance with identical laws, and
a common safe protocol is formed taking into account at least two redundant safe coupling protocols (14, 21) by accessing a common buffer register (30) using each of the processing channels (1, 2) wherein a write authorisation is allocated only once for each register location,
**characterised in that** when writing at least elements (14') of the common safety protocol using a processing channel (1) with write authorisation, at least one further processing channel (2) is first of all used to check (25) whether these elements (14') are identical to one another, and access to the common buffer register for the purpose of storing these elements is enabled only when they are identical to one another.

2. Method as claimed in the preceding Claim, further **characterised in that** the respective write authorisations and verification duties are determined by prescribing specific master and/or slave functionalities for the processing channels (1,2).

3. Method as claimed in the preceding Claim, further **characterised in that** the specific master and/or slave functionalities for the processing channels (1, 2) are changed in accordance with particular cycles.

4. Method as claimed in any one of the preceding Claims, further **characterised in that** the same address bus (102) which is connected to the buffer register and the same data bus (103) which is connected to the buffer register are accessed using each of the processing channels (1, 2).

5. Method as claimed in the preceding Claim, further **characterised in that** during the write operation the respective protocol elements (14') which are to be written into at least one register location are transferred to the data bus (103) using the processing channel (1) which has the corresponding write authorisation and are read from said data bus using the at least one further processing channel (2) for the purpose of verification.

6. Method as claimed in the preceding Claim, further **characterised in that** after verification has been carried out the at least one processing channel (2) which carries out verification is used to output an enable signal (26) for enabling the write signal for the buffer register.

7. Method as claimed in any one of the two preceding Claims, further **characterised in that** after the protocol elements have been transferred to the data bus (103), the processing channel (1) which is writing-in is used to output an enable signal (16).

8. Method as claimed in any one of the four preceding Claims, further **characterised in that** a respective register location for writing-in protocol elements using one of the processing channels (1,2) is prescribed by transferring the corresponding address to the address bus (102).

9. Method as claimed in the preceding Claim, further **characterised in that** an address for determining a register location is transferred and protocol elements for this register location are written using the same processing channel or different processing channels.

10. Method as claimed in any one of the preceding Claims, further **characterised in that** a watchdog component which is connected between the processing channels (1, 2) and the buffer register is used to monitor the function of the processing channels (1, 2).

11. Method as claimed in the preceding Claim, further **characterised in that** an enable signal is required from the watchdog component in order to enable access to the common buffer register for the purpose of storing elements to be written-in.

12. Method as claimed in the preceding Claim, further **characterised in that** a standard RAM, a standard DPM or a memory/protocol chip which is hostile to read-back, in particular a serial register expansion chip, is used as the buffer register (30).

13. Method as claimed in any one of the preceding Claims, further **characterised in that** the common safe protocol is transferred from the buffer register (30) to a further application-specific coupling device (35) on one channel.

14. Method as claimed in any one of the preceding Claims, which is used for the single-channel bus coupling of the safety-critical process.

15. Device for the coupling of a safety-critical process from a safe environment comprising at least two redundant processing channels to an environment which is not safe or to a safe environment but which comprises fewer processing channels, comprising
at least two redundant computers (11, 21) for the processing of an identical input data record to form a respective safe protocol (14, 24) using identical laws, and a circuit arrangement for connecting each computer (11, 21) to a common buffer register (30) in such a manner that write access is given to only a respective one of the computers for each register location in the buffer register (30) and access to the common buffer register for storing the elements to be written-in is locked until the elements to be written-in have been verified by at least one further computer.

16. Device as claimed in the preceding Claim, further **characterised in that** the computers are allocated respective write authorisations or verification duties by means of specific master and/or slave functionalities which can also be changed.

17. Device as claimed in any one of Claims 15 or 16, further **characterised in that** the circuit arrangement includes a common address bus (102) and a common data bus (103).

18. Device as claimed in any one of the preceding Claims 15 to 17, further
**characterised in that** the computers (11, 21) are connected to one another using a communication interface (101).

19. Device as claimed in any one of the preceding Claims 15 to 18, further
**characterised in that** the circuit arrangement requires an enable signal (26) from the computer which is carrying out verification in order to enable a write signal for accessing the register.

20. Device as claimed in the preceding Claim, further **characterised in that** the circuit arrangement requires an enable signal (16) from the computer which is writing in order to enable a write signal for accessing the register.

21. Device as claimed in any one of the preceding Claims 15 to 20, further
**characterised in that** the circuit arrangement includes a watchdog component which is connected to the computers (11,21) and to the buffer register for the purpose of monitoring the function of the computers (11,21).

22. Device as claimed in the preceding Claim, further **characterised in that** access to the common buffer register for the purpose of storing elements to be written-in is enabled only in response to an enable signal from the watchdog component.

23. Device as claimed in any one of the preceding Claims 15 to 22, further
**characterised in that** the computers (11, 21) each include an integrated protocol chip or are connected on the output side to a protocol chip (13, 23) or include software which provides the function of the protocol chip.

24. Device as claimed in any one of the preceding Claims 15 to 23, further
**characterised in that** the device is formed as a bus subscriber unit and the computers are connected on the input side at least to input channels for connecting process data input units, or **in that** the device is formed as a bus control unit.

25. Device as claimed in any one of the preceding Claims 15 to 24, in that the circuit arrangement is formed in simple logic or as FPGA.

26. Device as claimed in the preceding Claim, further **characterised in that** the buffer register (30) is a standard RAM, a standard DPM or a memory which is hostile to read-back, in particular a serial register expansion chip.

27. Device as claimed in any one of the preceding Claims 15 to 26, further
**characterised in that** the buffer register (30) comprises an interface for a direct single-channel bus coupling or for the single-channel connection to an application-specific bus coupling device (35).

28. Device as claimed in any one of the preceding Claims 15 to 27, which is adapted for a single-channel bus coupling of the safety-critical process.

## Revendications

1. Procédé pour le rattachement d'un processus critique au niveau de la sécurité provenant d'un environnement sûr, présentant au moins deux canaux de traitement redondants, à un environnement non sûr ou à un environnement sûr, qui présente cependant moins de canaux de traitement, avec lequel un ensemble de données important pour le processus critique au niveau de la sécurité est traité par les au moins deux canaux de traitement (1, 2) redondants selon des lois générales identiques pour former à chaque fois un protocole (14, 24) sûr, et un protocole commun et sûr est formé en tenant compte d'au moins deux protocoles (14, 24) redondants et sûrs pour le rattachement, et ce en recourant par chacun des canaux de traitement (1, 2) à un registre intermédiaire (30) commun, une autorisation d'écriture n'étant donnée qu'une fois pour chaque point de registre, **caractérisé en ce que**, lors de l'opération d'écriture au moins de fractions (14') du protocole commun et sûr au moyen d'un canal de traitement (1) autorisé pour l'écriture, ces fractions (14') sont contrôlées (25) d'abord au niveau de l'identité réciproque par au moins un autre canal de traitement (2), et l'accès au registre intermédiaire commun n'est autorisé pour le dépôt de ces fractions que dans le cas d'une identité réciproque.

2. Procédé selon la revendication précédente, **caractérisé** également en ce que les autorisations d'écriture et obligations de vérification respectives sont déterminées par la spécification de fonctionnalités de maître et/ou esclave spécifiques pour les canaux de traitement (1, 2).

3. Procédé selon la revendication précédente, **caractérisé** également en ce que les fonctionnalités de maître et/ou esclave spécifiques pour les canaux de traitement (1, 2) sont changées selon des cycles définis.

4. Procédé selon l'une quelconque des revendications précédentes, **caractérisé** également en ce que, par chacun des canaux de traitement (1, 2), on a recours au même bus d'adresse (102) relié au registre intermédiaire et au même bus de données (103) relié au registre intermédiaire.

5. Procédé selon la revendication précédente, **caractérisé** également en ce que, lors de l'opération d'écriture, les fractions de protocole (14') à inscrire respectivement sous au moins un point de registre sont transmises au bus de données (103) par le canal de traitement (1) présentant l'autorisation d'écriture correspondante et sont lues à partir de là par le au moins un autre canal de traitement (2) pour la vérification.

6. Procédé selon la revendication précédente, **caractérisé** également en ce qu'un signal de validation (26) est sorti par le au moins un canal de traitement (2) effectuant la vérification, une fois la vérification effectuée, pour la validation du signal d'écriture pour le registre intermédiaire.

7. Procédé selon l'une quelconque des deux revendications précédentes, **caractérisé** également en ce qu'un signal de validation (16) est envoyé par le canal de traitement (1) d'inscription, après la transmission des fractions de protocole, au bus de données (103).

8. Procédé selon l'une quelconque des quatre revendications précédentes, **caractérisé** également en ce qu'un point de registre spécifique est prédéfini pour l'inscription de fractions de protocole par l'un des canaux de traitement (1, 2) par la transmission de l'adresse correspondante au bus d'adresse (102).

9. Procédé selon la revendication précédente, **caractérisé** également en ce que la transmission d'une adresse pour la détermination d'un point de registre et l'écriture de fractions de protocole pour ce point de registre est effectuée par le même canal de traitement ou par des canaux de traitement différents.

10. Procédé selon l'une quelconque des revendications précédentes, **caractérisé** également en ce que, pour le contrôle du fonctionnement des canaux de traitement (1, 2), on utilise un composant de watchdog commuté entre les canaux de traitement (1, 2) et le registre intermédiaire.

11. Procédé selon la revendication précédente, **caractérisé** également en ce qu'un signal de validation est utilisé par le composant de watchdog pour la validation de l'accès au registre intermédiaire commun pour le dépôt de fractions à inscrire.

12. Procédé selon la revendication précédente, **caractérisé** également en ce que, comme registre intermédiaire (30), on utilise une RAM standard, un DPM standard, ou un composant de mémoire/protocole ne permettant pas la relecture, en particulier une puce d'extension de registre série.

13. Procédé selon l'une quelconque des revendications précédentes, **caractérisé** également en ce que le protocole commun et sûr est transmis à partir du registre intermédiaire (30) par un canal à un autre dispositif de rattachement (35) conçu de façon spécifique à l'application.

14. Procédé selon l'une quelconque des revendications précédentes, qui est utilisé pour le rattachement au bus par un canal du processus critique au niveau de la sécurité.

15. Dispositif pour le rattachement d'un processus critique au niveau de la sécurité provenant d'un environnement sûr, présentant au moins deux canaux de traitement redondants, à un environnement non sûr ou à un environnement sûr, qui présente cependant moins de canaux de traitement, comprenant au moins deux ordinateurs (11, 21) redondants pour le traitement d'un ensemble de données d'entrée identique avec l'utilisation de lois générales identiques pour former un protocole (14, 23) sûr, et un agencement de circuit pour relier chaque ordinateur (11, 21) à un registre intermédiaire (30) commun de telle sorte que, pour chaque point de registre du registre intermédiaire (30), on n'a une possibilité d'accès pour l'écriture que pour respectivement l'un des ordinateurs, et l'accès au registre intermédiaire commun pour un dépôt de fractions à enregistrer est verrouillé jusqu'à la vérification des fractions à enregistrer par au moins un autre ordinateur.

16. Dispositif selon la revendication précédente, **caractérisé** également en ce que des autorisations d'écriture ou obligations de vérification respectives sont attribuées aux ordinateurs par des fonctionnalités de maître et/ou esclave spécifiques, également modifiables.

17. Dispositif selon l'une quelconque des revendications 15 ou 16, **caractérisé** également en ce que l'agencement de circuit comprend un bus d'adresse (102) commun et un bus de données (103) commun.

18. Dispositif selon l'une quelconque des revendications précédentes 15 à 17, **caractérisé** également en ce que les ordinateurs (11, 21) sont reliés les uns aux autres par une interface de communication (101).

19. Dispositif selon l'une quelconque des revendications 15 à 18 précédentes, **caractérisé** également en ce que l'agencement de circuit exige pour la validation d'un signal d'écriture, pour l'accès au registre, un signal de validation (26) de l'ordinateur effectuant la vérification.

20. Dispositif selon la revendication précédente, **caractérisé** également en ce que l'agencement de circuit exige pour la validation d'un signal d'écriture, pour l'accès au registre, un signal de validation (16) de l'ordinateur enregistrant.

21. Dispositif selon l'une quelconque des revendications 15 à 20 précédentes, **caractérisé** également en ce que l'agencement de circuit comprend pour le contrôle du fonctionnement des ordinateurs (11, 21) un composant de watchdog relié aux ordinateurs (11, 21) et au registre intermédiaire.

22. Dispositif selon la revendication précédente, **caractérisé** également en ce que la validation de l'accès au registre intermédiaire commun pour le dépôt de fractions à inscrire ne s'effectue qu'en réaction à un signal de validation du composant de watchdog.

23. Dispositif selon l'une quelconque des revendications 15 à 22 précédentes, **caractérisé** également en ce que les ordinateurs (11, 21) comprennent chacun une puce de protocole intégrée ou sont reliés côté sortie à une puce de protocole (13, 23) ou comprennent un logiciel mettant à disposition la fonction de la puce de protocole.

24. Dispositif selon l'une quelconque des revendications 15 à 23 précédentes, **caractérisé** également en ce que le dispositif est conçu comme l'unité d'usager de bus et les ordinateurs sont commutés côté entrée au moins à des canaux d'entrée pour le rattachement d'unités d'entrée de données de processus ou en ce que le dispositif est conçu comme unité de commande de bus.

25. Dispositif selon l'une quelconque des revendications 15 à 24 précédentes, **caractérisé** également en ce que l'agencement de circuit est conçu dans une logique simple ou sous forme de FPGA.

26. Dispositif selon la revendication précédente, **caractérisé** également en ce que le registre intermédiaire (30) est une RAM standard, un DPM standard ou une mémoire ne permettant pas de relecture, en particulier une puce d'extension de registre série.

27. Dispositif selon l'une quelconque des revendications 15 à 26 précédentes, **caractérisé** également en ce que le registre intermédiaire (30) présente une interface pour un rattachement de bus direct monocanal ou pour le rattachement monocanal à un dispositif de rattachement de bus (35) conçu de façon spécifique à l'application.

28. Dispositif selon l'une quelconque des revendications 15 à 27 précédentes, qui est adapté pour un rattachement de bus monocanal du processus critique au niveau de la sécurité.
